# EUROPEAN PATENT APPLICATION

(11) **EP 4 528 972 A1**
(43) Date of publication of application: **26.03.2025**
(21) Application number: 24192062.8
(22) Date of filing: 31.07.2024
(51) Int. Cl.: H02J 7/00, H01M 10/48

(54) **BATTERY MONITORING DEVICES, SYSTEMS, AND METHODS**

(30) Priority: 21.09.2023 US 202318371337
(71) Applicant: O2Micro, Inc., Santa Clara, CA 95054 (US)
(72) Inventor: Li, Guoxing, Sunnyvale, CA 94089 (US)
(74) Representative: Lippert Stachow Patentanwälte Rechtsanwälte

(57) **Abstract**

In a battery monitoring device, a power management unit manages the power supplied to the battery monitoring device. A monitoring circuit monitors a status of a corresponding battery and measures power consumption of the power management unit. A communication interface receives a first command and a second command from a host through an adjacent monitoring device, and transmits, to the host through the adjacent monitoring device, information for the status of the corresponding battery in response to the first command and information for the measured power consumption in response to the second command. The communication interface also receives a third command, through the adjacent monitoring device, that is generated by the host based on the information for the measured power consumption and information for power consumption of the adjacent monitoring device. A balance module adjusts the power consumption of the power management unit according to the third command.

## Description

### BACKGROUND

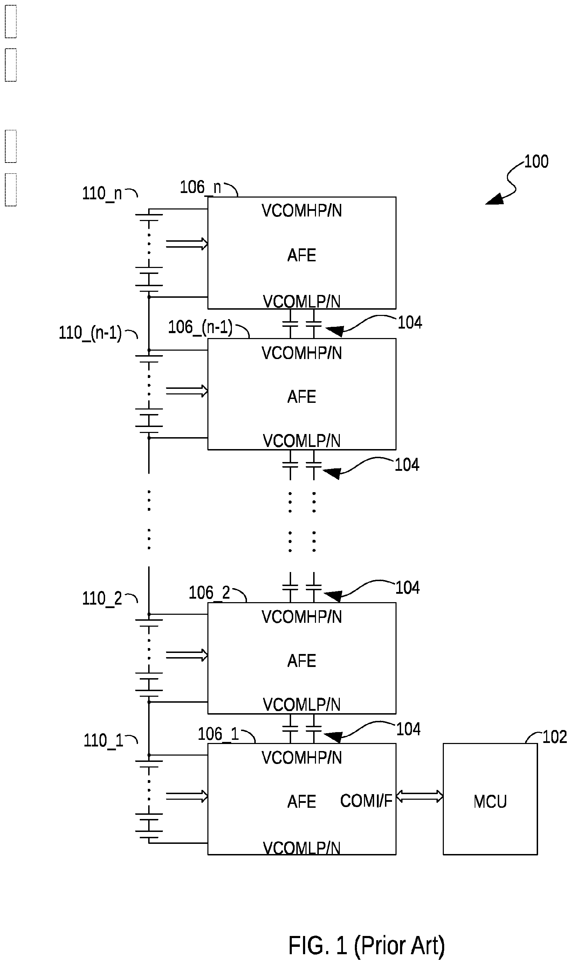

FIG. 1 illustrates a block diagram of a conventional battery monitoring system 100 that monitors a pack of batteries 110_1-110_n (n=2, 3, 4, ...). Each battery 110_1-110_n includes multiple battery cells. The batteries 110_1-110_n can be used in a high-power application environment such as an electric vehicle, a powerwall, or the like. As shown in FIG. 1, the battery monitoring system 100 includes a set of analog front ends (AFEs) 106_1-106_n. Each of the AFEs 106_1-106_n is coupled to a corresponding battery of the batteries 110_1-110_n, and is configured to monitor statuses (e.g., such as battery cell voltages, temperature, a battery current, and abnormal conditions) of the corresponding battery. The AFEs 106_1-106_n are coupled in a stacked or sequential manner, and can communicate with a microcontroller unit (MCU) 102 in a daisy-chain manner. In other words, the MCU 102 can receive information for the statuses of the batteries 110_1-110_n from the AFEs 106_1-106_n in a daisy-chain manner.

The MCU 102 can broadcast a set of commands to the AFEs 106_1-106_n. One of the commands (hereinafter, the status-monitoring command) is set to instruct or command the AFEs 106_1-106_n to monitor statuses of the batteries 110_1-110_n. More specifically, the MCU 102 can generate a status-monitoring command and transmit the command to the "bottom" AFE 106_1 (that is, the first AFE in the stack or sequence of AFEs). The bottom AFE 106_1 can execute the status-monitoring command and transmit the command to the next AFE 106_2 adjacently coupled to the bottom AFE 106_1. Similarly, the AFE 106_2 can execute the command and transmit the command to the next AFE 106_3, and so on. In response to the status-monitoring command, the AFEs 106_1-106_n obtain information for the statuses of the batteries 110_1-110_n. The "top" AFE 106_n (that is, the AFE furthest from the MCU 102 in the daisy chain) can transmit the status information for the "top" battery 110_n to its adjacent AFE 106_(n-1), the AFE 106_(n-1) can then transmit that information to the AFE 106_(n-2), and so on. As such, the bottom AFE 106_1 can transmit the information for the statues of the top battery 110_n to the MCU 102. In a similar manner, the AFE 106_(n-1) can send the status information for the battery 110_(n-1) to the MCU 102 through the AFEs 106_(n-2), 106_(n-3), ..., 106_1.

Accordingly, in a battery status monitoring process, the "lower" AFEs may consume more power than the "higher" AFEs in the daisy chain. For example, the bottom AFE 106_1 is between all of the other AFEs and the MCU 102, and so is involved in all communications between the AFEs; thus, it will consume more power than the other AFEs. This can cause the voltages of the batteries 110_1-110_n to be unbalanced. In addition, each of the AFEs 106_1-106_n may perform some processes (e.g., voltage level shifting, voltage sensing, comparing, battery cell balancing, etc.) internally. Each of the AFEs 106_1-106_n may perform these processes independently from the other AFEs. Consequently, the power consumption levels of the AFEs 106_1-106_n may be very different from each other, which also can cause the voltages of the batteries 110_1-110_n to be unbalanced. Accordingly, a solution that resolves the problems caused by the different power consumption levels of the AFEs 106_1-106 would be beneficial.

### SUMMARY

Embodiments of the present invention provide a solution to the problems described above.

In an embodiment, a battery monitoring device includes a power management unit, a monitoring circuit, a communication interface, and a balance module. The power management unit is operable for managing the power supplied to the battery monitoring device. The monitoring circuit is coupled to the power management unit and is operable for monitoring a status of a corresponding battery and measuring power consumption of the power management unit. The communication interface is coupled to the monitoring circuit, and is operable for: receiving a first command and a second command from a host through an adjacent monitoring device configured to monitor a status of an adjacent battery adjacently coupled to the corresponding battery; transmitting, to the host through the adjacent monitoring device, information for the status of the corresponding battery in response to the first command; transmitting, to the host through the adjacent monitoring device, information for the measured power consumption in response to the second command; and receiving a third command, through the adjacent monitoring device, that is generated by the host based on the information for the measured power consumption and information for power consumption of the adjacent monitoring device. The balance module is coupled to the power management unit and the communication interface, and is operable for adjusting the power consumption of the power management unit according to the third command.

### BRIEF DESCRIPTION OF THE DRAWINGS

Features and advantages of embodiments of the claimed subject matter will become apparent as the following detailed description proceeds, and upon reference to the drawings, where like numerals depict like parts, and in which:
FIG. 1 illustrates a block diagram of a conventional battery monitoring system.
FIG. 2A illustrates a block diagram of an example of a battery monitoring device, in an embodiment of the present invention.
FIG. 2B illustrates a block diagram of an example of a battery monitoring device, in an embodiment of the present invention.
FIG. 3 illustrates a block diagram of an example of a battery monitoring system, in an embodiment of the present invention.
FIG. 4 illustrates a block diagram of an example of a battery monitoring system, in an embodiment of the present invention.
FIG. 5A illustrates a circuit diagram of an example of a balance module, in an embodiment of the present invention.
FIG. 5B illustrates a circuit diagram of an example of a balance module, in an embodiment of the present invention.
FIG. 6 illustrates a flowchart of an example of operations performed by a battery monitoring device, in an embodiment of the present invention.
FIG. 7 illustrates an example of a flowchart of operations performed by a battery monitoring system, in an embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications, and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

Embodiments of the present invention introduce battery monitoring devices and battery monitoring systems that can solve the problems (e.g., unbalanced battery voltages) caused by different power consumption levels of the battery monitoring devices in the conventional battery monitoring system 100 (FIG. 1). In an embodiment, the disclosed battery monitoring devices include an analog front end (AFE), e.g., an integrated circuit (IC). A battery monitoring system according to an embodiment of the present invention includes multiple such battery monitoring devices. Each battery monitoring device is operable for monitoring statuses (e.g., such as but not limited to battery cell voltages, temperature, a battery current, and/or abnormal conditions) of a corresponding battery, and is operable for monitoring its own power consumption. Based on the information for the power consumption of each of the battery monitoring devices in the battery monitoring system, a host (e.g., including a microcontroller unit (MCU) or an electronic control unit (ECU)) can control one or more target devices in the battery monitoring system to perform a power consumption balance operation, to reduce or eliminate differences between the power consumption levels of the battery monitoring devices, thereby resolving the issue of unbalanced battery voltages present in the conventional battery monitoring system.

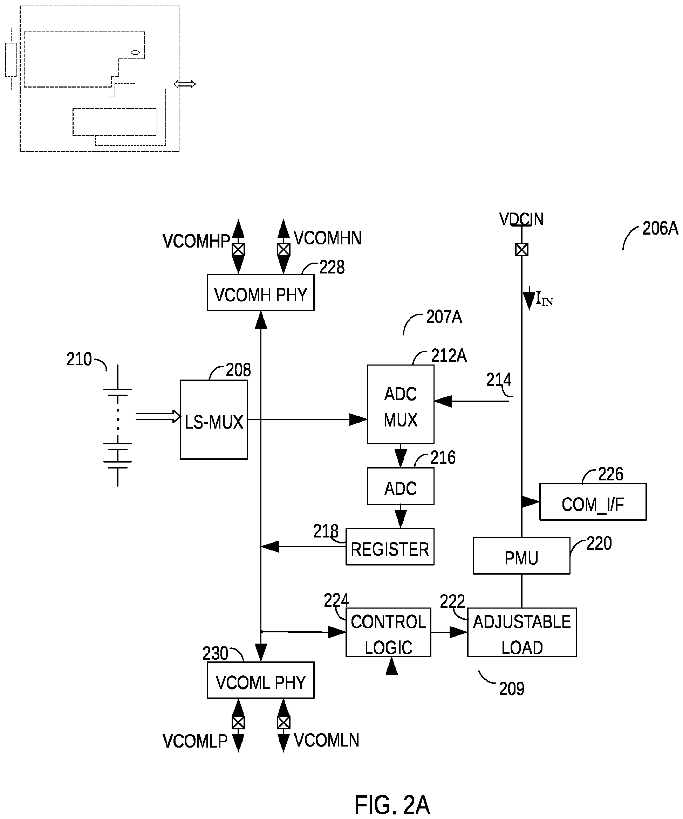

FIG. 2A illustrates a block diagram of an example of a battery monitoring device 206A that monitors a status of a battery 210, in an embodiment of the present invention.

Referring to FIG. 2A, the battery monitoring device 206A includes a monitoring circuit 207A, a register 218, a power management unit (PMU) 220, a balance module 209, a set of communication interfaces 228, 230 and 226, and a set of terminals VCOMHP, VCOMHN, VCOMLP, and VCOMLN. The battery 210 can include one or more rechargeable battery cells, such as but not limited to lithium-ion battery cells, lithium polymer battery cells, nickelcadmium battery cells, nickel-metal hydride battery cells, lithium iron phosphate battery cells, or lead-acid battery cells.

In an embodiment, the battery monitoring device 206A receives power, e.g., a supply voltage V_{DCIN}, from a terminal VDCIN. The supply voltage V_{DCIN} of the battery monitoring device 206A may be provided from a power supply circuit (not shown in FIG. 2A) coupled to the battery 210, and that power supply circuit can transform a cell voltage supplied from one or more cells of the battery 210 to the supply voltage V_{DCIN}.

In an embodiment, the PMU 220 is operable for managing the power supplied to the battery monitoring device 206A by the power supply circuit. As shown in FIG. 2A, the PMU 220 can receive power that is input from the terminal VDCIN and generate a group of well-regulated outputs to power other components of the battery monitoring device 206A, e.g., the monitoring circuit 207A, the register 218, the balance module 209, the communication interfaces 228, 230 and 226, etc. Therefore, a power consumption level of the PMU 220 can indicate a power consumption level of the battery monitoring device 206A. In an embodiment, the power consumed by the battery monitoring device 206A may be determined by measuring the power consumption of the PMU 220.

In an embodiment, the monitoring circuit 207A can monitor a status (such as, but not limited to, a battery cell voltage, a temperature, a battery current, and/or an abnormal condition) of the battery 210 and measure a power consumption P_{AFE} of the battery monitoring device 206A (or a power consumption of the PMU 220). As shown in FIG. 2A, the monitoring circuit 207A includes a level shifter multiplexer 208, an analog-to-digital converter (ADC) multiplexer 212A, an ADC 216, and a power consumption measuring circuit 214.

In an embodiment, the level shifter multiplexer 208 is coupled to an external voltage acquiring circuit (not shown in FIG. 2A) that acquires a voltage signal of the battery 210. The level shifter multiplexer 208 receives voltages V_{IN} of cells in the battery 210 from the voltage acquiring circuit and converts them to the battery voltages V_{BAT}. Each voltage V_{IN} is a voltage at a positive electrode of a cell relative to a reference ground. Each voltage V_{BAT} is a voltage difference between positive electrodes of two adjacent cells.

In an embodiment, the power consumption measuring circuit 214 is coupled to the PMU 220 and is operable for measuring power consumed by the battery monitoring device 206A. In an embodiment, a value of the supply voltage V_{DCIN} of the battery monitoring device 206A may be a preset value or a measured value. For example, the abovementioned power supply circuit that provides the supply voltage V_{DCIN} may include a constant voltage regulator that sets the supply voltage V_{DCIN} to a preset value. For another example, the supply voltage V_{DCIN} of the battery monitoring device 206A may be derived from a cell voltage supplied from one or more cells of the battery 210, and a value of supply voltage V_{DCIN} may be determined by measuring the cell voltage. In other words, the value of the supply voltage V_{DCIN} to the PMU 220 is a known value. Therefore, in an embodiment, the power consumption measuring circuit 214 determines the power consumption of the PMU 220 (e.g., representing the power consumption P_{AFE} of the battery monitoring device 206A) by sensing an input current I_{IN} flowing from the terminal VDCIN to the PMU 220. In this embodiment, the power consumption P_{AFE} of the battery monitoring device 206A is indicated by the input current I_{IN} of the PMU 220. That is, if the input current I_{IN} is increased, then that can indicate that the power dissipated by the battery monitoring device 206A is also increased.

In an embodiment, the power consumption measuring circuit 214 includes a sensing resistor coupled between the terminal VDCIN and the PMU 220, and the input current I_{IN} can be measured by sensing a voltage drop across the sensing resistor. Those skilled in the art may design any suitable circuit to sense the current flowing from the terminal VDCIN to the PMU 220.

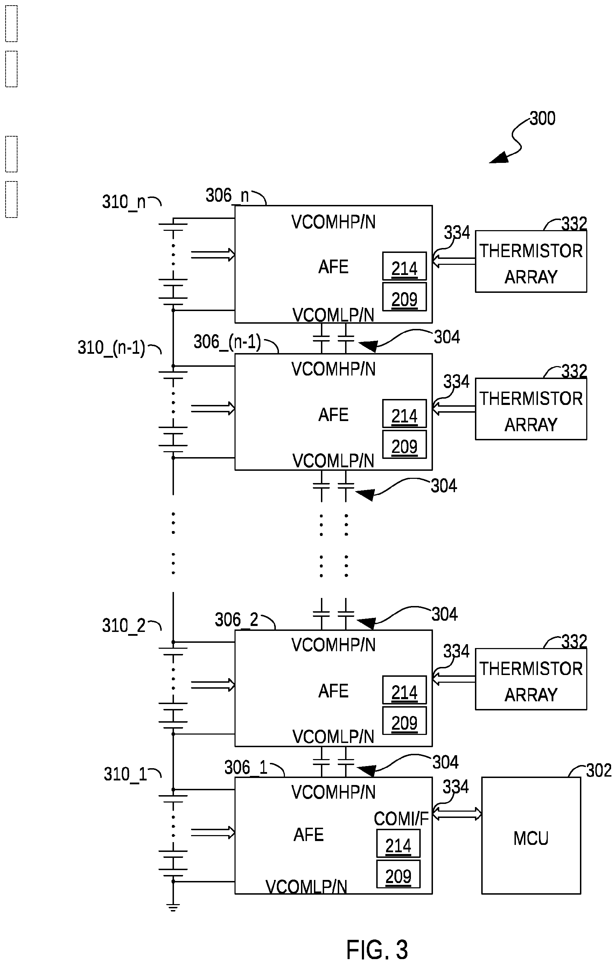

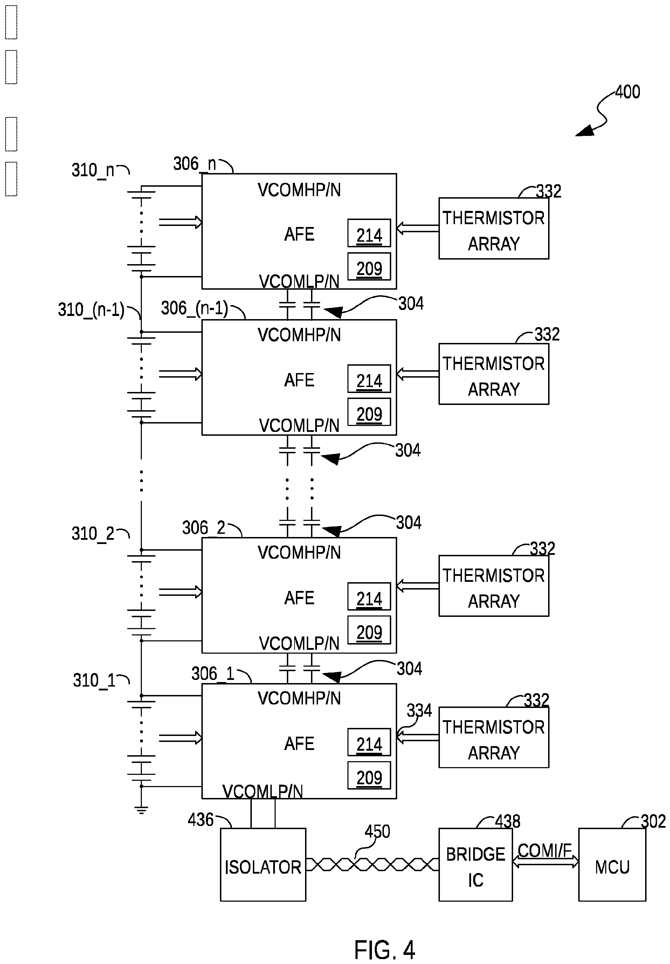

In an embodiment, by measuring the power consumed by the battery monitoring device 206A, it is possible to monitor whether the battery monitoring device 206A is experiencing an abnormal power condition. For example, if the measured power consumption exceeds a maximum allowed limit P_{MAX}, then the battery monitoring device 206A may determine the presences of an abnormal situation with potential safety concern and send a safety alert (or a fault report) to a host (e.g., shown as an MCU 302 in FIG. 3 and FIG. 4) to request a hardware reset command for recovery from the abnormal power condition. The present invention is not so limited. In another embodiment, the host receives the information for the power consumption P_{AFE} of the battery monitoring device 206A, and determines that the abnormal condition is present in the battery monitoring device 206A if the power consumption P_{AFE} of the battery monitoring device 206A exceeds the maximum allowed limit P_{MAX}.

In an embodiment, the ADC multiplexer 212A is coupled to the level shifter multiplexer 208 and the power consumption measuring circuit 214. In an embodiment, the ADC multiplexer 212A receives a battery voltage V_{BAT} of each cell in the battery 210 from the level shifter multiplexer 208 and the input current I_{IN} from the power consumption measuring circuit 214, and transmits the battery voltages V_{BAT} and/or the input current I_{IN} to the ADC 216. The ADC multiplexer 212A may also be coupled to a temperature acquisition circuit or a current acquisition circuit (not shown in FIG. 2A), and may transmit a battery temperature T_{BAT} and/or a battery current I_{BAT} represented by analog signals to the ADC 216.

In an embodiment, the ADC 216 is coupled to the ADC multiplexer 212A and is operable for converting analog signals indicative of statuses of the battery 210 (e.g., the battery voltage V_{BAT}, the battery temperature T_{BAT}, and/or the battery current I_{BAT}) and an analog signal indicative of the power consumption P_{AFE} (for example, the input current I_{IN}) of the battery monitoring device 206A to digital signals. In an embodiment, the converted digital values of the statuses of the battery 210 and the power consumption P_{AFE} of the battery monitoring device 206A are stored in the register 218, such that they can be accessed by the host (e.g., shown as the MCU 302 in FIG. 3 and FIG. 4) via daisy-chained links. Although the register 218 is shown as a separate component in FIG. 2A, the register 218 may instead be a dedicated register inside a memory or storage (not shown) of the battery monitoring device 206A.

In an embodiment, the balance module 209 is coupled to the PMU 220, and is operable for adjusting the power consumption P_{AFE} of the battery monitoring device 206A (or the PMU 220) according to a power-consumption-balance command. In an embodiment, upon receiving the power-consumption-balance command from the host, the balance module 209 is activated to perform a balance operation to balance the battery 210 corresponding to the battery monitoring device 206A and an adjacent battery corresponding to a battery monitoring device adjacent to the battery monitoring device 206A, by reducing a difference between the power consumption P_{AFE} of the battery monitoring device 206A and the power consumption of the adjacent battery monitoring device.

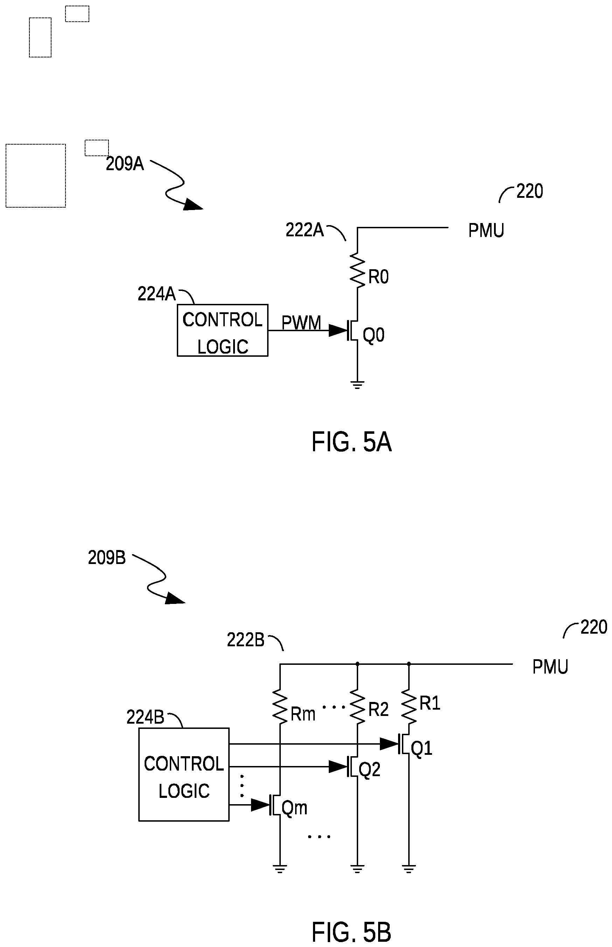

As shown in FIG. 2A, the balance module 209 may include an adjustable load 222 (also referred to herein as a balance load 222) and a control logic circuit 224 coupled to the adjustable load 222. The control logic circuit 224 is operable for enabling/activating the adjustable load 222 according to the power-consumption-balance command. The adjustable load 222 is operable for adjusting (for example, increasing) the power consumption P_{AFE} of the battery monitoring device 206A (or the PMU 220). The control logic circuit 224 can adjust/select a load value of the adjustable load 222 (e.g., represented by a current flowing through the adjustable load 222) as further described below in conjunction with FIGs. 5A and 5B. In an embodiment, the adjustable load 222 is connected between the PMU 220 and a reference ground and receives and consumes power provided from the PMU 220. The adjustable load 222 may consume more power as a load value of the adjustable load 222 increases, or consume less power as the load value decreases. In an embodiment, when the balance module 209 is enabled/activated, the PMU 220 provides a preset voltage *V_{load}* (or a relatively stable voltage *V_{load}*) to the balance module 209. For example, the PMU 220 may include a voltage regulator setting the voltage *V_{load}* to a preset value. In another embodiment, when the balance module 209 is enabled/activated, the balance module 209 receives the abovementioned supply voltage V_{DCIN} via the PMU 220, e.g., V_{LOAD}=V_{DCIN}. In other words, a value of the voltage *V_{load}* that applies to the balance module 209 (when the balance module is activated) is a known value. In these embodiments, the control logic circuit 224 is operable for adjusting a load value of the adjustable load 222 according to the power-consumption-balance command received from the host, thereby controlling an amount of the power consumed by the adjustable load 222. The adjustable load 222 can include a programmable resistor network, a PWM (pulse-width modulation)-controlled fixed resistor load, or other load architectures.

In an embodiment of the present invention, the battery monitoring device 206A (FIG. 2A) further includes a timer (not shown) for controlling an activation time of the balance module 209, e.g., a time interval during which the balance module 209 is enabled/activated. For example, the battery monitoring device 206A may set the length of the activation time to a default value. For another example, the abovementioned power-consumption-balance command may include information for the length of the activation time, and the battery monitoring device 206A can control the activation time of the balance module 209 according to that length. By controlling the activation time of the balance module 209 to within a range, over balancing of the battery 210 (e.g., over consuming power from the battery 210) can be avoided.

Although the control logic circuit 224 is shown as a separate component in FIG. 2A, the control logic circuit 224 may instead be located inside a controller (not shown) of the battery monitoring device 206A. The specific details of how the host generates and sends the power-consumption-balance command, and how the balance module 209 performs the balance operation to reduce the difference between the power consumption P_{AFE} of the battery monitoring device 206A and that of the adjacent battery monitoring device are described below with reference to FIG. 3 and/or FIG. 4.

FIG. 5A illustrates a circuit diagram of an example of a balance module 209A, in an embodiment of the present invention. FIG. 5A is described in combination with FIG. 2A.

In the example of FIG. 5A, the balance module 209A includes a control logic circuit 224A and an adjustable load 222A. The balance module 209A, control logic circuit 224A, and adjustable load 222A shown in FIG. 5A can be embodiments of the abovementioned balance module 209, control logic circuit 224, and adjustable load 222 in FIG. 2A. In an embodiment, the adjustable load 222A includes a resistor R0 and a switch Q0 (in this example, the switch Q0 includes a metal-oxide-semiconductor field-effect transistor) coupled to the resistor R0. The control logic circuit 224A is operable for turning on the switch Q0 to allow a load current to flow through the adjustable load 222A. For example, the adjustable load 222A includes a PWM-controlled fixed resistor load, where the switch Q0 can be periodically turned on by a PWM signal transmitted from the control logic circuit 224A, and where the PWM signal is generated by the control logic circuit 224A according to the power-consumption-balance command received from the host. In this example, the control logic circuit 224 may adjust a duty cycle of the PWM signal to control an average current flowing through the adjustable load 222A, thereby controlling the average power consumed by the adjustable load 222A.

The balance module in the present invention may be in any suitable architecture. For example, FIG. 5B illustrates another example of a circuit diagram of a balance module 209B according to another embodiment of the present invention. As shown in FIG. 5B, the balance module 209B includes a control logic circuit 224B and an adjustable load 222B. The adjustable load 222B includes a set of resistors R1, R2, ..., Rm and a set of switches Q1, Q2, ..., Qm (m=3, 4, ...). Each of the resistors R1, R2, ..., Rm is connected in series with a corresponding switch of the switches Q1, Q2, ..., Qm. In an embodiment, the resistors R1, R2, ... Rm has the same resistance, and therefore an average load of the adjustable load 222B may be controlled based on the number of switches Q1, Q2, ..., Qm that are turned on. In another embodiment, the resistors R1, R2, ..., Rm have different resistances, and therefore an average load of the adjustable load 222B may be controlled based on which of the switches Q1, Q2, ..., Qm is/are turned on. Accordingly, the control logic circuit 224B can selectively turn on one or more of the switches Q1, Q2, ..., Qm to adjust the power consumed by the adjustable load 222B.

Returning to FIG. 2A, in an embodiment, each of the communication interfaces 228 and 230 in the battery monitoring device 206A is operable for communicating with another device, for example, an adjacent battery monitoring device in a battery monitoring system with multiple battery monitoring devices stacked (connected in sequence) and communicating with each other in a daisy-chain manner, through corresponding terminals (e.g., terminals VCOMHP and VCOMHN, and/or terminals VCOMLP and VCOMI,N). For example, each of the interfaces 228 and 230 may include a daisy-chain interface that can communicate with a daisy-chain interface of the adjacent battery monitoring device through a daisy-chain-based communication protocol. In an embodiment, the communication interfaces 228 and 230 transmit and/or receive signals in a differential manner. For example, each of the communication interfaces 228 and 230 includes a pair of terminals (e.g., VCOMHP and VCOMHN, or VCOMI,P and VCOMI,N), and the signals communicated between the battery monitoring device 206A and adjacent battery monitoring devices are transmitted/received in pairs at the paired terminals. The paired signals have equal magnitudes but opposite polarities, and the information to be communicated can be indicated by the difference between these two signals.

In an embodiment, the communication interface 226 is operable for communicating with the host. For example, the communication interface 226 may include, for example, a UART (universal asynchronous receiver-transmitter) interface or an SPI interface (serial peripheral interface).

For example, in a case in which the battery monitoring device 206A functions as a master device in the battery monitoring system with multiple battery monitoring devices communicating with each other in a daisy-chain manner (e.g., the battery monitoring device 206A is located at the "bottom" of the daisy-chain structure, closest to the host or as the first device in the daisy chain), the communication interface 226 is enabled and the battery monitoring device 206A may directly communicate with the host through the communication interface 226. For example, the battery monitoring device 206A, if functioning as a master device, can receive a command (such as a status-monitoring command or a power-consumption-monitoring command) from the host directly through the communication interface 226, and transmit the command received from the host to an adjacent battery monitoring device through the communication interface 228 (or 230, depending on the transmission direction of the daisy-chain). Similarly, the battery monitoring device 206A, if functioning as a master device, can receive information from the adjacent battery monitoring device (for example, including information for a status of a corresponding battery and information for power consumption of the adjacent battery monitoring device monitored by the adjacent battery monitoring device) through the communication interface 230 (or 228, depending on the transmission direction of the daisy-chain), and transmit the received information and information monitored by itself (for example, including information for a status of the battery 210 and information for its own power consumption) to the host through the communication interface 226.

In a case in which the battery monitoring device 206A functions as a slave device in the battery monitoring system with multiple battery monitoring devices communicating with each other in a daisy-chain manner (for example, the battery monitoring device 206A is located in the middle of the daisy-chain structure, or at the end of that structure), the communication interface 226 may be disabled and the battery monitoring device 206A may communicate with the host through one or more adjacent monitoring devices in a daisy-chain manner. For example, the battery monitoring device 206A, if functioning as a slave device, can receive a command (such as a status-monitoring command or a power-consumption-monitoring command) sent from the host through an intermediate battery monitoring device, coupled between the host and the device 206A, and through the communication interface 230 (or 228, depending on the transmission direction of the daisy-chain). The intermediate battery monitoring device can be referred to as a first adjacent monitoring device. The battery monitoring device 206A can also function as an intermediate device between the host and another battery monitoring device (referred to as a second adjacent monitoring device), and transmit the received command to the second adjacent monitoring device through the communication interface 228 (or 230, depending on the transmission direction of the daisy-chain). Similarly, the battery monitoring device 206A, if functioning as a slave device, can receive information from the second adjacent monitoring device (for example, including information for a status of a corresponding battery and information for power consumption monitored by the second adjacent monitoring device) through the communication interface 228 (or 230, depending on the transmission direction of the daisy-chain), and transmit the received information and information monitored by itself (for example, information for a status of the battery 210 and information for its own power consumption) to the host through the first adjacent monitoring device through the communication interface 230 (or 228, depending on the transmission direction of the daisy-chain).

In an embodiment, if the battery monitoring device 206A functions as a slave device, a communication module in the communication interface 226 that performs the communication with the host can be disabled, and a set of pins of the communication interface 226 may be repurposed to communicate with a peripheral device (or an external monitoring circuit) to acquire additional information, e.g., about the status of the battery 210. For example, the interface 226 in the slave device may be coupled to an external thermistor array (shown as 332 in FIG. 3) to receive temperature information about the battery 210, where the temperature information may be used to double-check the battery temperature.

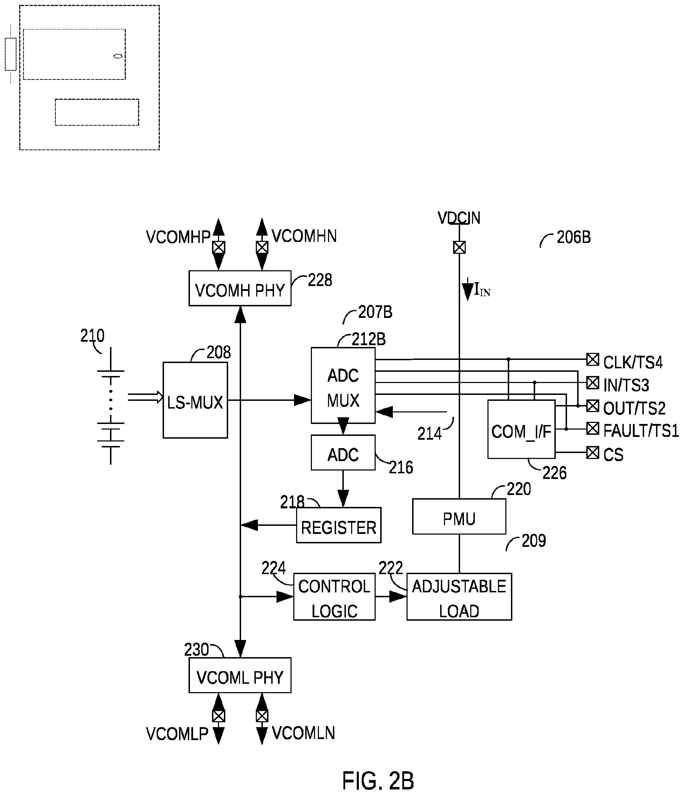

FIG. 2B shows examples of a set of pins (e.g., CS, CKL/TS4, IN/TS3, OUT/TS2, and FAULT/TS1) of the communication interface 226 in a battery monitoring device 206B in an embodiment of the present invention. In contrast to the battery monitoring device 206A of FIG. 2A, the battery monitoring device 206B includes a monitoring circuit 207B that includes an ADC multiplexer 212B that is configured to receive signals from the set of pins and send some or all of those signals to the ADC 216. The pin CS is used to receive an enable signal for enabling or disabling the communication module in the interface 226. When the battery monitoring device 206B functions as a master device, the communication module in the interface 226 is enabled, and the terminals CKL/TS4, IN/TS3, OUT/TS2, and FAULT/TS1 can be used to communicate with the host. When the battery monitoring device 206B functions as a slave device, the communication module in the interface 226 is disabled, and the terminals CKL/TS4, IN/TS3, OUT/TS2, and FAULT/TS1 can be repurposed so for the battery monitoring device 206B to communicate with another monitoring circuit (for example, the external thermistor array).

Each battery monitoring device 206A or 206B may receive, from a host (e.g., the microcontroller 302 of FIG. 3 and FIG. 4)), a command indicating whether the battery monitoring device is to operate in an active mode (e.g., also referred to as a normal operation mode) or in a sleep mode (e.g., also referred to as an idle mode). A register (not shown) in each battery monitoring device can store information for that command. A battery monitoring device can switch from one mode to the other mode if the information in the register changes. More specifically, in an embodiment, the battery monitoring device determines whether the measured power consumption is less than a predetermined threshold P_{TH}. For example, the battery monitoring device may be operating in the active mode when the battery 210 is being charged. After the battery 210 is fully charged, the power consumption P_{AFE} of the battery monitoring device can decrease. If the power consumption P_{AFE} decreases to less than the predetermined threshold P_{TH}, then some of the circuit components in the battery monitoring device are allowed to be deactivated to further reduce the power consumption P_{AFE}.

FIG. 3 illustrates a block diagram of an example of a battery monitoring system 300, in an embodiment of the present invention. FIG. 4 illustrates a block diagram of an example of a battery monitoring system 400 in another embodiment of the present invention. In FIG. 3 and FIG. 4, elements with the same reference numerals have similar functions. FIG. 3 and FIG. 4 are described in combination with FIG. 2A, FIG. 2B, FIG. 5A, and FIG. 5B.

In an embodiment, referring to FIG. 3, the battery monitoring system 300 includes a set of battery monitoring devices 306_1-306_n (n=2, 3, 4, ...), a set of isolation capacitor circuits 304, and a microcontroller unit (MCU) 302. In an embodiment, each battery monitoring device 306_1-306_n has the same structure as the battery monitoring device 206A or 206B described above. Each battery monitoring device 306_1-306_n is coupled to a corresponding battery 3101-310_n and is operable for monitoring a status (such as but not limited to a battery cell voltage, a temperature, and an abnormal condition) of the corresponding battery. The battery monitoring devices 306_1-306_n are coupled in a stacked (sequential or serial) manner, and each battery monitoring device can communicate with an adjacent battery monitoring device through the communication interface VCONH-IP/N and/or the communication interface VCOMLP/N in a daisy-chain manner. In an embodiment, every two adjacently coupled battery monitoring devices are electrically connected via an isolation capacitor circuit 304. When the adjacently coupled monitoring devices communicate with each other, the isolation capacitor circuit 304 can isolate/block the DC (direct-current) components in their communicating signals and allow the AC (analog-component) components in the communicating signals to pass through. In an embodiment, values of the supply voltages V_{DCIN} of the battery monitoring devices 306_1-306_n are set to be the same. In another embodiment, values of the supply voltages V_{DCIN} of the battery monitoring devices 306_1-306_n depend on the actual battery voltages of their corresponding batteries 310_1-310_n and so may be different.

In the example of FIG. 3, the MCU 302 is placed close to the battery monitoring device 310_1, and therefore the battery monitoring device 310_1, functioning as a master device, can directly communicate with the MCU 302 through the interface COMI/F. However, depending on the actual implementation of the battery monitoring system 300, the present invention is not so limited. For example, as shown in FIG. 4, the MCU 302 may be placed a distance away (e.g., one meter, two meters, etc.) from the master battery monitoring device 310_1, and therefore the MCU 302 is coupled to the master battery monitoring device 310_1 through a cable 450. In this example, the master battery monitoring device 310_1 can communicate with the MCU 302 through the communication interface VCOMLP/N, an isolator 436, the cable 450, and a bridge IC 438.

In an embodiment, the MCU 302 is operable for broadcasting commands to the battery monitoring devices 306_1-306_n in a daisy-chain manner. For example, the MCU 302 may broadcast a status-monitoring command to instruct (command) the battery monitoring devices 306_1-306_n to monitor statuses of the batteries 310_1-310_n, and a power-consumption-monitoring command to instruct the battery monitoring devices 306_1-306_n to measure their respective power consumption. More specifically, referring to FIG. 3, the master device 306_1 may receive the status-monitoring command and the power-consumption-monitoring command from the MCU 302, for example, through the interface COMI/F. The master device 306_1 may then transmit these commands to the next battery monitoring device 306_2 adjacently coupled to the master device 306_1, for example, through the interface VCOMHP/N. Similarly, the battery monitoring device 306_2 may transmit these commands to the next battery monitoring device 306_3, and so on, until the command reaches the "top" battery monitoring device 306_n (the last battery monitoring device in the daisy chain or sequence). The battery monitoring devices 306_1-306_n can execute the status-monitoring command to obtain information for the statuses of the corresponding batteries 310_1-310_n. The battery monitoring devices 306_1-306_n can also execute the power consumption-monitoring-command, e.g., in parallel, to obtain information for their power consumption (for example, the information for the input current I_{IN}). Then, the battery monitoring device 306_n may transmit the information for the status of the battery 310_n and the information for its power consumption to its adjacent device 306_(n-1) through the interface VCOMLP/N, and the device 306_(n-1) may further transmit the information received from the device 306_n to the device 306_(n-2) through the interface VCOMLP/N, and so on, until the information for the status of the battery 310_n and the information for the power consumption of the battery monitoring device 306_n reach the MCU 302 through the devices 306_(n-1), 306_(n-2), ..., 306_1. In a similar manner, the device 306_(n-1) can send the information for the status of the battery 310_n-1 and the information for its power consumption to the MCU 302 through the devices 306_(n-2), 306_(n-3), ..., 306_1, and so on for each of the other battery monitoring devices in the battery monitory system 300. As such, the master device 306_1 can obtain and transmit the information for the statuses of the batteries 310_1-310_n and the information for the power consumptions of the battery monitoring devices 306_1-306_n to the MCU 302 in a daisy-chain manner. In an embodiment, the MCU 302 periodically broadcasts the status-monitoring command and the power-consumption-monitoring command to the battery monitoring devices 306_1-306_n, and the battery monitoring devices 306_1-306_n, in response to these two commands, may periodically send the information for the statuses of the corresponding batteries 310_1-310_n and the information for their power consumption to the MCU 302.

After receiving the information for the power consumptions of all the battery monitoring devices 306_1-306_n, the MCU 302 may determine which device in the battery monitoring devices 306_1-306_n is consuming the most power. For example, the battery monitoring devices 306_1-306_n may send their respective device ID, e.g., address information, along with the information for the power consumption, such that the MCU 302 can determine which battery monitoring device is consuming the most power (e.g., it can determine the device ID of the battery monitoring device that is consuming the most power). For example, the supply voltages V_{DCIN} of the battery monitoring devices 306_1-306_n may be set to have the same known value, and the MCU 302 may determine the device that is consuming the most power by determining which device has the maximum input current I_{IN}. In another embodiment, because the supply voltages V_{DCIN} of the battery monitoring devices 306_1-306_n may be different, the MCU 302 first determines the power consumption of each battery monitoring device according to a measured value of the input current I_{IN} and a measured value of the supply voltage V_{DCIN} of that battery monitoring device, and then determines the device that is consuming the most power, e.g., that has the most power consumption. Hereinafter, to facilitate description, the battery monitoring device that consumes the most power is referred to as the reference device. Other battery monitoring devices in the system 300 other than the reference device may be referred to as "non-reference devices."

In an embodiment, the host can receive a safety alert (or a fault report) sent from a battery monitoring device indicating an abnormal condition, for example, the power consumption of the battery monitoring device is exceeding a maximum allowed limit P_{MAX}. In this case, the host can send a reset command to the battery monitoring device to instruct the device to perform a hardware reset to recover from the abnormal condition. In another case, if the host is operating in an idle mode (or a sleep mode), then the host may not respond to the safety alert sent from the battery monitoring device. In an embodiment, if the battery monitoring device does not receive a response (e.g., a reset command) from the host within a preset period of time, then the battery monitoring device performs a self-reset process to try to recover from the abnormal condition. In yet another embodiment, the host receives information for a measured power consumption of a battery monitoring device to determine whether an abnormal condition is present in the battery monitoring device. In this embodiment, if the measured power consumption of the battery monitoring device exceeds the maximum allowed limit P_{MAX}, then the host determines that the abnormal condition is present in the battery monitoring device, and then send the reset command to the battery monitoring device to instruct the device to perform a hardware reset to recover from the abnormal condition.

After identifying the reference device (the battery monitoring device that is consuming the most power), the MCU 302 may then determine one or more target devices in the non-reference devices that need to adjust their power consumption. The MCU 302 may further send a power-consumption-balance command to a target device, instructing the target device to perform a power consumption balance operation to reduce a difference between the power consumption of that target device and the power consumption of the reference device. In an embodiment, the MCU 302 generates the power-consumption-balance command according to the information for the power consumptions of the target device and the reference device. In an embodiment, the MCU 302 determines that each of the other (non-reference) battery monitoring devices of the battery monitoring devices 306_1-306_n (excluding the reference device) is a target device. In this embodiment, the power-consumption-balance command is used to instruct a balance module (for example, the balance module 209, 209A, or 209B) of each target device to increase power consumption such that the power consumption of the target device increases to an amount that is equal (or approximately equal) to the power consumption of the reference device. In another embodiment, if a difference between the power consumption (or an input current I_{IN}) of a non-reference device and that of the reference device is more than a preset threshold, then the MCU 302 may identify that non-reference device as the target device. In this embodiment, the power-consumption-balance command is used to instruct the balance module (for example, the balance module 209, 209A, or 209B) of the target device to consume an amount of power such that the difference between the power consumption of the target device and that of the reference device is reduced, e.g., decreases to less than the preset threshold.

Referring to FIG. 3, in an embodiment, if the MCU 302 identifies a set of target devices (the power consumptions of which are to be adjusted), then the MCU 302 may generate a set of power-consumption-balance commands, each of which includes information for an ID (e.g., address) of a corresponding target device and information for an increment to use to adjust (increase) the power consumption (e.g., information for a duty cycle of the abovementioned PWM signal) of the corresponding target device. The master device 306_1 may receive the power-consumption-balance command from the MCU 302, for example, through the interface COMI/F. The master device 306_1 may then transmit the power-consumption-balance command to the next battery monitoring device 306_2 adjacently coupled to the master device 306_1, for example, through the interface VCOMHP/N, and so on if necessary, until the command reaches the target device. Then, the balance module (e.g., 209, 209A, or 209B) in the target device can adjust the power consumption of the target device according to the information in the command.

In another embodiment, when the MCU 302 identifies the reference device(s) and obtains reference information for the power consumption of the reference device, the MCU 302 broadcasts that reference information to the target device(s). The balance module (e.g., 209, 209A, or 209B) in the target device may increase the power consumption of the target device to reduce a difference between the power consumption of the target device and that of the reference device according to the reference power consumption information.

Upon receiving the power-consumption-balance command, the target device may activate its balance module (for example, the balance module 209, 209A, or 209B) to consume power supplied from (or through) the PMU (for example, the PMU 220), so as to increase its own power consumption, thereby reducing the difference between the power consumption of the target device and that of the reference device. As described above, in an embodiment, the adjustable load (e.g., the adjustable load 222, 222A, or 222B) in the balance module is provided with a voltage *V_{load}* with a preset (or known) value, so the adjustable load may consume more power as a load value (e.g., represented by a current flowing through the adjustable load) increases, or consume less power as the load value decreases. In this embodiment, the control logic (e.g., the control logic circuit 224, 224A, or 224B) in the target device executes the power-consumption-balance command and generates a control signal to adjust a load value of the adjustable load in the target device, thereby adjusting a power consumption level of the adjustable load. Those skilled in the art know how to generate the power-consumption-balance command based on the difference between the power consumption of the target device and that of the reference device when a circuit architecture of the adjustable load is specific.

In an embodiment, the MCU 302 (FIG. 3) periodically broadcasts the power-consumption-monitoring command to instruct the battery monitoring devices 306_1-306_n to measure their respective power consumptions, the battery monitoring devices 306_1-306_n may periodically send back information for their respective power consumptions to the MCU 302, and then the MCU 302 may periodically send the power-consumption-balance command to instruct the target device(s) to perform a balance operation. Therefore, the MCU 302 is able to check the effectiveness of the previous balance operation of the target device(s). For example, the MCU 302 may check whether the differences between the power consumptions of the battery monitoring devices 306_1-306_n have been reduced sufficiently.

As such, embodiments of the present invention solve the unbalance issue for the batteries caused by different power consumption levels of the battery monitoring devices in the conventional battery monitoring system 100 (FIG. 1). Moreover, because the solutions provided by the present invention can be realized by adding two modules (a power consumption measuring module and a balance module) with simple circuit structures to a regular AFE, the unbalance issue can be solved with relatively low cost. In addition, it is also possible to detect in a timely manner whether any battery monitoring device is operating in an abnormal power condition.

Although, in the examples of FIG. 3 and FIG. 4, the battery monitoring devices 306_1-306_n are coupled to and controlled by an MCU 302 (or a host that includes the MCU 302), the invention is not so limited. In other embodiments, the battery monitoring devices 306_1-306_n can be coupled to and controlled by an electronic control unit (ECU) (or a host that includes an ECU).

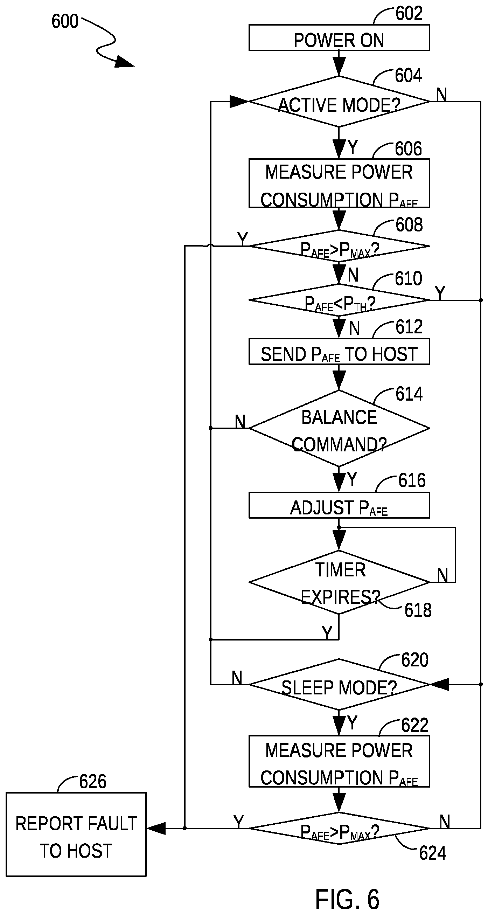

FIG. 6 illustrates a flowchart 600 of an example of operations performed by a battery monitoring device (e.g., 206A, 206B, or 306_1, ..., or 306_n), in an embodiment of the present invention. FIG. 6 is described in combination with FIG. 2A, FIG. 2B, FIG. 3, and FIG. 4.

As shown in FIG. 6, the battery monitoring device is powered on at step 602. At step 604, the battery monitoring device determines whether to operate in an active mode. For example, the battery monitoring device may receive, from a host (e.g., the MCU 302), a command indicating whether the battery monitoring device is to operate in an active mode (e.g., also referred to as a normal operation mode) or in a sleep mode (e.g., also referred to as an idle mode). A register in the battery monitoring device can store information for that command. The battery monitoring device can switch from one mode to the other mode if the information in the register changes.

In the active mode, in an embodiment, some, most, or all of the circuit components in the battery monitoring device can be activated, and the battery monitoring device can consume relatively higher power. If the battery monitoring device operates in the active mode, then the flowchart 600 goes to step 606; otherwise, the flowchart 600 goes to step 620.

At step 606, a monitoring circuit (e.g., 207A or 207B) in the battery monitoring device measures a power consumption P_{AFE} of the battery monitoring device. For example, the measured power consumption (the measured value of P_{AFE}) may include an input current I_{IN} of a power management unit (e.g., 220) in the battery monitoring device.

At step 608, the battery monitoring device determines whether the measured power consumption exceeds a maximum allowed limit P_{MAX}. If the measured power consumption exceeds the maximum allowed limit P_{MAX}, then the flowchart 600 goes to step 626 to send a safety alert (or a fault report) to a host (e.g., the MCU 302) to indicate that a potential safety concern is present. If the measured power consumption is less than the maximum allowed limit P_{MAX}, then the flowchart 600 goes to step 610.

At step 610, the battery monitoring device determines whether the measured power consumption is less than a predetermined threshold P_{TH}. In an embodiment, the predetermined threshold P_{TH} is provided to determine whether the battery monitoring device should switch from the active mode to the sleep mode. For example, the battery monitoring device may be operating in the active mode when the batteries 310_1-310_n are being charged. After the batteries 310_1-310_n are fully charged, the power consumption P_{AFE} of the battery monitoring device can decrease. If the power consumption P_{AFE} decreases to less than the predetermined threshold P_{TH}, it can indicate that some of the circuit components in the battery monitoring device are allowed to be deactivated to further reduce the power consumption. In other words, the battery monitoring device can switch from the active mode to the sleep mode.

Thus, at step 610, if the measured power consumption is less than the predetermined threshold P_{TH}, then the flowchart 600 goes to step 620; otherwise the flowchart 600 goes to step 612.

At step 612, the battery monitoring device sends information for the measured power consumption to the host.

At step 614, the battery monitoring device determines whether it has received a power-consumption-balance command, e.g., from the host. If the battery monitoring device receives a power-consumption-balance command from the host, then the flowchart 600 goes to step 616; otherwise, the flowchart 600 goes back to step 604.

Upon receiving the power-consumption-balance command from the host, a balance module (e.g., 209, 209A, or 209B) in the battery monitoring device is enabled/activated. At step 616, the balance module adjusts the power consumption P_{AFE} of the battery monitoring device according to the power-consumption-balance command. For example, the balance module may adjust the power consumption P_{AFE} of the battery monitoring device by enabling a balance load (e.g., 222, 222A, or 222B) in the balance module according to the power-consumption-balance command.

At step 618, the battery monitoring device determines whether a timer has expired. For example, the timer is used for controlling an activation time of the balance module. If the timer has expired, then the flowchart 600 goes back to step 604.

At step 620, the battery monitoring device determines whether to operate in the sleep mode. Although steps 604 and 620 are shown in FIG. 6 as two separate steps, the invention is not so limited. In an alternative embodiment, determining whether the battery monitoring device to operate in the active mode or the sleep mode can be performed in a single step. At step 620, if the battery monitoring device operates in the sleep mode, then the flowchart 600 goes to step 622; otherwise, the flowchart 600 goes to step 604.

At step 622, the battery monitoring device measures the power consumption P_{AFE}. At step 624, the battery monitoring device determines whether the measured power consumption exceeds the maximum allowed limit P_{MAX}. If the measured power consumption exceeds the maximum allowed limit P_{MAX}, then the flowchart 600 goes to step 626; otherwise, the flowchart 600 goes back to step 620. In step 626, the battery monitoring device sends a safety alert (or a fault report) to the host to indicate that a potential safety concern is present.

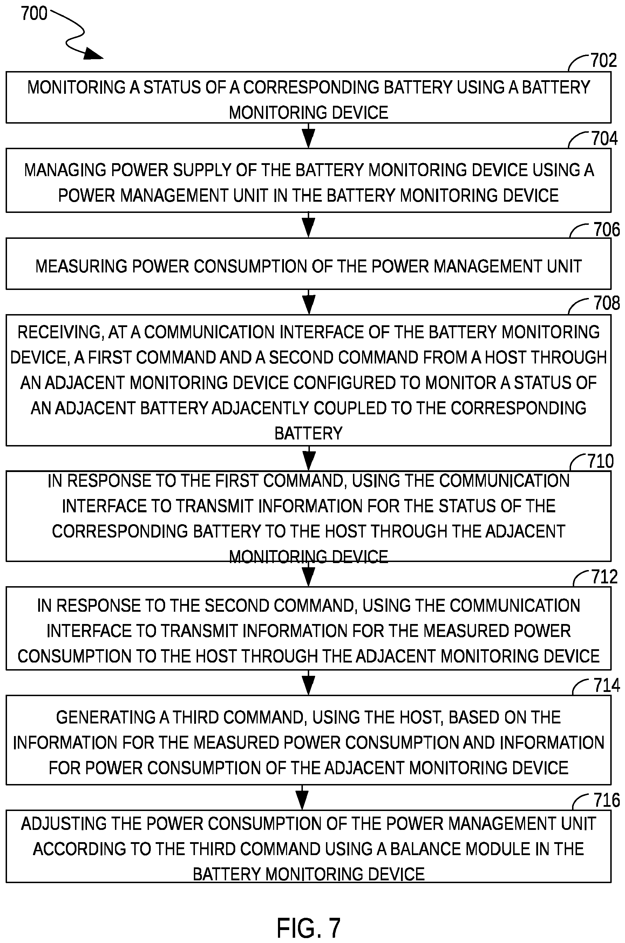

FIG. 7 illustrates an example of a flowchart 700 of operations performed by a battery monitoring system, in an embodiment of the present invention. FIG. 7 is described in combination with FIG. 2A, FIG. 2B, FIG. 3, and FIG. 4.

In block 702, a monitoring circuit (e.g., 207A or 207B) in a ("first") battery monitoring device (e.g., 206A or 206B, or 306_2, ..., or 306_n) monitors a status of a corresponding ("first") battery (e.g., 210, or 310_2, ..., or 310_n).

In block 704, a power management unit (e.g., 220) in the battery monitoring device manages power supplied to the battery monitoring device.

In block 706, the monitoring circuit measures power consumption of the power management unit. For example, the monitoring circuit may measure the power consumption of the power management unit by sensing an input current I_{IN} of the power management unit, where the information for the measured power consumption includes information for the input current IIN.

In block 708, the battery monitoring device receives, at a communication interface (e.g., 228 or 230) of the battery monitoring device, a first command and a second command from a host (e.g., MCU 302) through an adjacent ("second") battery monitoring device configured to monitor a status of an adjacent ("second") battery adjacently coupled to the corresponding (first) battery.

In block 710, in response to the first command, the (first) battery monitoring device uses the communication interface to transmit information for the status of the corresponding (first) battery to the host through the adjacent (second) monitoring device.

In block 712, in response to the second command, the (first) battery monitoring device uses the communication interface to transmit information for the measured power consumption to the host through the adjacent (second) monitoring device.

In block 714, the host generates a third command based on the information for the measured power consumption and information for power consumption of the adjacent (second) monitoring device.

In block 716, a balance module (e.g., 209, 209A, or 209B) in the battery monitoring device adjusts the power consumption of the power management unit according to the third command. For example, the balance module may adjust the power consumption of the power management unit by enabling a balance load (e.g., 222, 222A, or 222B) in the balance module according to the third command.

While the foregoing description and drawings represent embodiments of the present invention, it will be understood that various additions, modifications, and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A battery monitoring device, comprising:
a power management unit operable for managing power supplied to said battery monitoring device;
a monitoring circuit, coupled to said power management unit, and operable for monitoring a status of a first battery and for measuring power consumption of said power management unit;
a communication interface coupled to said monitoring circuit, said communication interface operable for receiving a first command and a second command from a host through a second battery monitoring device adjacent to said battery monitoring device and configured to monitor a status of a second battery adjacently coupled to said first battery, wherein said communication interface is operable for: transmitting, to said host through said second battery monitoring device, information for said status of said first battery in response to said first command; transmitting, to said host through said second battery monitoring device, information for the measured power consumption of said power management unit in response to said second command; and receiving a third command, through said second battery monitoring device, that is generated by said host based on said information for said measured power consumption and on information for power consumption measured by said second battery monitoring device; and
a balance module, coupled to said power management unit and said communication interface, and operable for adjusting said power consumption of said power management unit according to said third command.

2. The battery monitoring device of claim 1, wherein said monitoring circuit is operable for sensing an input current of said power management unit, and wherein said information for said measured power consumption of said power management unit comprises information for said input current.

3. The battery monitoring device of claim 1 or 2, wherein in response to said third command, said balance module is operable for balancing said first battery and said second battery by reducing a difference between power consumption of said battery monitoring device and power consumption of said second battery monitoring device.

4. The battery monitoring device of any one of claims 1 to 3, wherein said balance module comprises:
a balance load operable for adjusting said power consumption of said power management unit; and
a control circuit, coupled to said balance load, and operable for enabling said balance load according to said third command.

5. The battery monitoring device of claim 4, wherein said balance load comprises a switch and a resistive component coupled to said switch, and wherein said control circuit is operable for turning on said switch to allow a load current through said resistive component, and wherein
said control circuit is operable for generating a pulse-width modulation (PWM) signal to control said switch and for adjusting a duty cycle of said PWM signal according to said third command.

6. A battery monitoring system, comprising:
a plurality of devices, each device of said plurality of devices operable for monitoring a status of a corresponding battery in a plurality of batteries coupled in series, wherein said each device comprises:
a monitoring circuit operable for measuring power consumption of a power management unit;
a communication interface, coupled to said monitoring circuit, operable for: receiving a first command and a second command, transmitting information for said status of said corresponding battery in response to said first command, transmitting information for the measured power consumption of said power management unit in response to said second command, and receiving a third command that is generated based on said information for said measured power consumption, wherein said power management unit is operable for managing power supplied to said monitoring circuit and said communication interface; and
a balance module, coupled to said power management unit and said communication interface, and operable for adjusting said power consumption of said power management unit according to said third command; and
a host, coupled to said plurality of devices through said communication interface, operable for receiving a plurality of signals indicative of measured power consumption in said each device, and operable for generating said third command according to said signals.

7. The battery monitoring system of claim 6, wherein said monitoring circuit is operable for sensing an input current of said power management unit, and wherein said information for said measured power consumption of said power management unit comprises information for said input current.

8. The battery monitoring system of claim 6 or 7, wherein said plurality of devices comprises a reference device and a plurality of non-reference devices, and wherein said host is operable for identifying said reference device according to said signals and for providing said third command to a non-reference device of said plurality of non-reference devices to reduce a difference between power consumption of said non-reference device and power consumption of said reference device.

9. The battery monitoring system of claim 8, wherein the measured power consumption of said reference device is greater than the measured power consumption of each non-reference device of said plurality of non-reference devices,
and wherein
said host is further operable for balancing said plurality of batteries by commanding the balance module in said each non-reference device to increase power consumption of said each non-reference device.

10. The battery monitoring system of any one of claims 6 to 9,
wherein said plurality of devices comprise a first device coupled to said host through a second device of said plurality of devices, said first device operable for: monitoring a status of a first battery of said batteries, receiving said first, second, and third commands from said host through said second device, and sending information for said status of said first battery and information for measured power consumption of said first device from said first device to said host through said second device.

11. The battery monitoring system of any one of claims 6 to 10, wherein said balance module comprises:
a balance load operable for adjusting said power consumption of said power management unit; and
a control circuit, coupled to said balance load, and operable for enabling said balance load according to said third command.

12. The battery monitoring system of claim 11, wherein said balance load comprises a switch and a resistive component coupled to said switch, and wherein said control circuit is operable for turning on said switch to allow a load current through said resistive component, and wherein
said control circuit is operable for generating a pulse-width modulation (PWM) signal to control said switch and for adjusting a duty cycle of said PWM signal according to said third command.

13. A method, comprising:
monitoring a status of a first battery using a first battery monitoring device;
managing power supplied to said first battery monitoring device using a power management unit in said first battery monitoring device;
measuring power consumption of said power management unit;
receiving, at a communication interface of said first battery monitoring device, a first command and a second command from a host through a second battery monitoring device configured to monitor a status of a second battery adjacently coupled to said first battery;
in response to said first command, using said communication interface to transmit information for said status of said first battery from said first battery monitoring device to said host through said second battery monitoring device;
in response to said second command, using said communication interface to transmit information for the measured power consumption of said power management unit to said host through said second battery monitoring device;
generating a third command, using said host, based on said information for said measured power consumption and information for power consumption of said second battery monitoring device; and
adjusting said power consumption of said power management unit according to said third command using a balance module in said first battery monitoring device.

14. The method of claim 13,
wherein said measuring comprises: sensing an input current of said power management unit,
wherein said information for said measured power consumption of said power management unit comprises information for said input current.

15. The method of claim 13 or 14, further comprising:
in response to said third command, using said balance module to balance said first battery and said second battery by reducing a difference between power consumption of said first battery monitoring device and power consumption of said second battery monitoring device, wherein said reducing said difference comprises:
enabling a balance load in said balance module according to said third command.
